# EUROPÄISCHE PATENTSCHRIFT

(11) **EP 2 028 099 B1**
(45) Veröffentlichungstag und Bekanntmachung des Hinweises auf die Patenterteilung: **15.09.2010**
(21) Anmeldenummer: 07016481.9
(22) Anmeldetag: 22.08.2007
(51) Int. Cl.: B63H 3/06, B64C 11/44

(54) **Antriebssystem mit einem Verstellpropeller**
Propulsion system with a controllable pitch propeller
Système de propulsion avec une hélice à pas variable

(43) Veröffentlichungstag der Anmeldung: 25.02.2009
(73) Patentinhaber: Bader, Ingo, 1431 AD Aalsmeer (NL)
(72) Erfinder: Bader, Ingo, 1431 AD Aalsmeer (NL)
(74) Vertreter: Hauck Patent- und Rechtsanwälte

(56) Entgegenhaltungen:
- FR-A- 2 553 596

## Beschreibung

Die Erfindung bezieht sich auf ein Antriebssystem mit einem Verstellpropeller, genauer auf ein derartiges Antriebssystem, das zwei Elektromotoren aufweist.

Antriebssysteme mit Verstellpropeller werden als Antrieb zum Beispiel für Schiffe und Flugzeuge eingesetzt. Darüberhinaus werden derartige Antriebssysteme auch für Einrichtungen verwendet, die weniger dem Vortrieb, sondern vorwiegend einer Steuerung dienen, beispielsweise in einem Bugstrahlruder eines Schiffes oder als Heckrotor eines Hubschraubers. Schließlich machen auch Einrichtungen zum Fördern von Flüssigkeiten oder Gasen von Antriebssystemen mit Verstellpropellern Gebrauch, beispielsweise Pumpen, Turbinen oder Lüfter. Alle genannten Systeme sind Antriebssysteme im Sinne dieser Anmeldung.

Die Verstellpropeller weisen dabei eine Anzahl von Blättern auf, die auf das umgebende Medium, in der Regel Wasser bzw. Luft, wirken und deren Anstellwinkel verstellt werden kann. Durch Verstellen des Anstellwinkels kann der Verstellpropeller an unterschiedliche Bedingungen angepaßt werden. Es lassen sich optimale strömungsdynamische Eigenschaften des Verstellpropellers in Abhängigkeit von der Strömungsgeschwindigkeit, der Drehzahl und dem verfügbaren Drehmoment erreichen.

Die Kombination eines Verstellpropellers mit einem Elektromotor gewinnt zunehmend an Bedeutung, weil immer leistungsfähigere und leichtere Elektromotoren, insbesondere infolge der preisgünstigeren Verfügbarkeit hochwertiger Permanentmagnete, und ebenfalls leistungsfähigere und kompaktere elektrische Energiequellen verfügbar werden. Eine elektrischer Antrieb stellt somit für viele Anwendungen, beispielsweise Motorsegelflugzeuge, Ultraleichtflugzeuge und Modellflugzeuge oder -hubschrauber eine emissionsarme Alternative zu Antrieben mit Verbrennungsmotor dar.

Zur Verstellung der Blattanstellwinkel sind eine Vielzahl von Mechanismen bekannt geworden. In der Regel sind die um ihre Längsachse drehbar gelagerten Blätter im Bereich ihrer Wurzel mit einem Hebel versehen, über dessen Stellung der Blatteinstellwinkel vorgegeben wird. Zur Ansteuerung der Hebel ist eine spezielle Mechanik erforderlich, die gemeinsam mit den Blättern rotiert und die die Hebel meist mit einer Art Steuerkurve anlenkt. Aufgrund dieses mechanischen Aufbaus ist der Verstellbereich der Blatteinstellwinkel begrenzt. Außerdem sind separate Antriebe für die Drehbewegung des Verstellpropellers und zur Verstellung des Blattanstellwinkels notwendig.

Aus DT 2 404 694 A1 ist ein Antrieb für ein Spielflugzeug bekannt geworden, bei dem jedes Blatt eines Verstellpropellers an seiner Wurzel ein Kegelrad aufweist. Auf der Symmetrieachse des Verstellpropellers sind zwei weitere Kegelräder angeordnet, die mit dem an der Blattwurzel befindlichen Kegelrad in Eingriff stehen, sodass eine relative Verdrehung der beiden auf der Symmetrieachse angeordneten Kegelräder eine Drehung des Blatts um seine Längsachse, also eine Verstellung des Blatteinstellwinkels, bewirkt. Bei dem bekannten Antrieb ist eines der auf der Symmetrieachse angeordneten Kegelräder angetrieben, das zweite auf der Symmetrieachse angeordnete Kegelrad ist mit dem ersten über eine Feder gekoppelt. Die relative Verdrehung der beiden Kegelräder ist außerdem durch zwei Anschläge, entsprechend einem minimalen und einem maximalen Blatteinstellwinkel, begrenzt. Durch die Kopplung der beiden Kegelräder über die Feder wird eine automatische Verstellung des Blattanstellwinkels in Abhängigkeit vom Drehmoment erreicht.

Aus EP 0 928 738 A2 ist ein Antrieb mit einem Verstellpropeller für ein Schiff bekannt. Bei diesem Antrieb sind die Blätter des Verstellpropellers an ihrem äußeren Ende drehbar innerhalb eines ringförmigen Läufers eines Elektromotors gelagert. Die Blätter weisen dazu eine entlang ihrer Längsachse angeordnete Achse auf, deren äußeres Ende in dem Läufer des Antriebsmotors drehbar gelagert ist. In einem Abstand von der Längsachse weist jedes Blatt einen Stift auf, der in einem rechtwinklig zur Rotationsrichtung ausgerichteten Schlitz in einem zweiten, ringförmigen Läufer eines zweiten Elektromotors geführt ist. Bei dem bekannten Antrieb sind beide Motoren als bürstenlose Innenläufer ausgeführt, d.h. die Statorwicklungen befinden sich außerhalb der Läufer. Innerhalb gewisser Grenzen, die insbesondere von der Geometrie des Führungsschlitzes abhängig sind, kann der Blatteinstellwinkel durch eine relative Drehung des zweiten Läufers gegenüber dem ersten Läufer verstellt werden.

In der FR 2 553 596, der als nächsliegender Stand der Technik angesehen wird, ist ein Verstellpropeller beschrieben, wobei jedes Blatt ein Kegelzahnrad an der Wurzel aufweist, das von zwei elektrisch angetriebenen Kegelzahnrädern gedreht wird, um den Blattanstellwinkel zu verstellen. Der Antrieb der beiden elektrisch angetriebenen Kegelzahnräder geschieht durch einen einzelnen Elektromotor. Dies hat zur Folge, dass der Blattanstellwinkel nur begrenzt und in gleichem Maß für jedes Blatt verstellt werden kann.

Davon ausgehend ist es die Aufgabe der Erfindung, ein Antriebssystem mit einem Verstellpropeller zur Verfügung zu stellen, das einen verbesserten Verstell- und Antriebsmechanismus aufweist.

Diese Aufgabe wird gelöst durch ein Antriebssystem mit
- einem Verstellpropeller mit einer Symmetrieachse, der mindestens zwei Blätter aufweist, die zur Verstellung des Blatteinstellwinkels entlang ihrer Längsachse drehbar gelagert sind und ein Zahnrad aufweisen,
- zwei Antriebszahnrädern, die auf der Symmetrieachse angeordnet sind und von jeweils einer Seite mit den an den Blättern befindlichen Zahnrädern in Eingriff stehen, und
- zwei Elektromotoren, die jeweils mit einem der Antriebszahnräder verbunden sind.

Die Verbindung der Elektromotoren mit den Antriebszahnrädern kann durch eine unmittelbare mechanische Verbindung oder über ein Getriebe erfolgen. Durch die Verwendung zweier Antriebszahnräder, die über zwei Elektromotoren unabhängig voneinander angetrieben werden, wird ein unbegrenzter Verstellbereich der Blatteinstellwinkel ermöglicht.

Insbesondere können die Blätter auch so verstellt werden, dass sich der Winkel zwischen den Blättern und der von den Blättern überstrichenen Ebene umkehrt. Dadurch wird eine Schubumkehr erreicht. Es ist ebenfalls möglich, den Anstellwinkel um 180° zu verändern und gleichzeitig die Rotationsrichtung des Propellers umzukehren. Dadurch kann der Antrieb auch bei Blättern, deren Steigung sich mit dem Abstand von der Symmetrieachse infolge einer verwundenen Form des Blatts ändert, in beiden Richtungen mit einem strömungsdynamisch optimalen Blattprofil erfolgen, sodass ein gleichmäßig hoher Wirkungsgrad erreicht wird.

Ebenfalls möglich ist eine kontinuierliche Rotationsbewegung der Blätter um ihre Längsachse, wobei gänzlich andere Strömungsverhältnisse an den Blättern vorherrschen als im regulären Betrieb. Dies kann vorteilhaft für eine Reinigung der Blätter sein.

Weiter wird ein besonders einfacher mechanischer Aufbau des Verstellpropellers erreicht, der ohne separate Einstellhebel oder komplizierte Steuerkurven auskommt. Die Funktionalität dieser nun entbehrlichen Komponenten wird durch die Steuerung der Elektromotoren übernommen, d.h. die Steuerung des Blatteinstellwinkels erfolgt ohne zusätzliche mechanische Komponenten durch eine geeignete Ansteuerung der Elektromotoren. Ein separater Antrieb, der eigens für den Verstellmechanismus erforderlich wäre, kann ebenfalls entfallen. Die symmetrische Anordnung der beiden Antriebszahnräder zu beiden Seiten der Längsachse der Blätter reduziert zudem die mechanische Belastung insbesondere der Lagerung der Blätter.

Gemäß einer Ausgestaltung der Erfindung sind drei oder mehr Blätter vorgesehen. Dadurch wird erreicht, dass die beiden Antriebszahnräder durch den Eingriff mit den an den Blättern angeordneten Zahnrädern automatisch gegen ein Verkippen gegenüber der Symmetrieachse gesichert sind.

Bevorzugt sind die Zahnräder an den Blättern und die beiden Antriebszahnräder als Kegelräder ausgeführt, oder es kommen an den Blättern Stirnzahnräder zum Einsatz, die mit Kronenrädern an den beiden Antriebszahnrädern zusammenwirken. Beide Alternativen stellen eine besonders vorteilhafte Ausführung des Zahnradgetriebes für die Blattverstellung dar.

Bei einer bevorzugten Ausgestaltung sind die Zahnräder an den Blättern am äußeren Ende der Blätter angeordnet und die Antriebszahnräder sind ringförmig ausgebildet. Bei dieser Anordnung befinden sich die Blätter des Verstellpropellers also im Inneren des Zahnradgetriebes für die Blattverstellung. Es ist dadurch möglich, die im Mittelpunkt des Verstellpropellers befindliche Nabe besonders kompakt auszuführen.

Eine weitere bevorzugte Ausgestaltung sieht vor, dass die Elektromotoren bürstenlose Innenläufer sind, deren Läufer mit den Antriebszahnrädern verbunden sind, sodass die Statorwicklungen der Elektromotoren außerhalb des von den Blättern überstrichenen Bereichs angeordnet sind. Diese Ausgestaltung ist besonders vorteilhaft, wenn das Antriebssystem innerhalb eines Rohres eingesetzt werden soll. In diesem Fall sind alle elektrischen Anschlüsse von außen zugänglich. Ein weiterer Vorteil dieser Ausgestaltung, bei der die elektrischen und die mechanischen Komponenten voneinander getrennt sind, besteht darin, dass der Luftspalt zwischen dem Läufer und dem Stator des bürstenlosen Innenläufers auch bei einem Einsatz unter Wasser von dem den Verstellpropeller umgebenden Medium erfüllt sein kann.

Gemäß einer weiteren Ausgestaltung sind die Zahnräder an den Blättern an den der Symmetrieachse zugewandten Enden der Blätter angeordnet. Die Zahnräder befinden sich also an den Blattwurzeln. Besonders vorteilhaft wird diese Ausgestaltung mit Elektromotoren kombiniert, die bürstenlose Außenläufer sind, deren Läufer jeweils mit einem Antriebszahnrad verbunden sind, sodass die Statorwicklungen der Elektromotoren innerhalb des von den Blättern überstrichenen Bereichs angeordnet sind. Es ergibt sich ein besonders kompakter Aufbau, bei dem sich alle elektrischen Komponenten in der Nähe der Symmetrieachse konzentrieren.

Gemäß einer weiteren Ausgestaltung sind die Läufer der Elektromotoren auf einer gemeinsamen, hohlen Achse gelagert. Neben der konstruktiven Vereinfachung mit einer gemeinsamen Achse erlaubt die hohle Ausführung, die zu dem einen Motor führenden Versorgungsleitungen innerhalb der Achse zu führen, sodass die Ansteuerung beider Motoren problemlos von einer Seite aus erfolgen kann.

Weiterhin ist bevorzugt, die beiden Antriebszahnräder integral mit den Motorglocken der beiden Läufer zu fertigen. Es wird dadurch ein besonders einfacher mechanischer Aufbau und eine optimale Verbindung der Antriebszahnräder mit den Läufern erreicht.

Gemäß einer Ausgestaltung ist eine elektronische Steuerung zur Ansteuerung der Elektromotoren vorgesehen. Grundsätzlich kann dabei eine separate Steuerung für jeden Elektromotor verwendet werden. Vorteilhaft ist jedoch die Verwendung einer einzigen elektronischen Steuerung zur Ansteuerung beider Motoren. In diesem Fall kann die für die Verstellung des Blatteinstellwinkels wichtige relative Drehbewegung der beiden Elektromotoren von einer einzigen, zentralen Steuerung gesteuert werden. Die Steuerung erfolgt im Wesentlichen durch Vorgabe einer mit dem gewünschten Blatteinstellwinkel korrespondierenden Phasenbeziehung zwischen den beiden in die Statorwicklungen der beiden Motoren eingeprägten Ströme bzw. Spannungen.

Gemäß einer Ausgestaltung weist die elektronische Steuerung Winkelsensoren zur Ermittlung der Winkelstellung der Elektromotoren auf. Aus der Winkelstellung der beiden Elektromotoren kann auch auf die relative Winkellage beider Motoren geschlossen werden, sodass der vorliegende Blatteinstellwinkel aus den Signalen der Winkelsensoren bestimmt werden kann. Die entsprechenden Signale stellen somit eine wichtige Größe dar, die der elektronischen Steuerung zur Verfügung gestellt wird.

Gemäß einer Ausgestaltung sind als Winkelsensoren Nulldurchgangssensoren vorgesehen. Dabei handelt es sich um besonders einfache Sensoren, die nicht die genaue Winkellage der Läufer der Elektromotoren während der Rotationsbewegung messen, sondern lediglich ein Signal abgeben, welches den Durchgang durch eine Nullwinkellage anzeigt. Aufgrund dieses Nulldurchgangssignals kann die elektronische Steuerung die Drehzahl des jeweiligen Läufers und auch die Winkellage des Läufers zu einem bestimmten Zeitpunkt berechnen.

Gemäß einer weiteren bevorzugten Ausgestaltung sind die Elektromotoren auch im Generatorbetrieb betreibbar. Im Generatorbetrieb der Elektromotoren kann aus der Rotationsbewegung des Verstellpropellers elektrische Energie gewonnen werden. Zur Kontrolle des Blattanstellwinkels auch im Generatorbetrieb gibt eine Steuereinheit jedem Motor ein bestimmtes Drehmoment vor und überwacht die relative Winkellage beider Motoren. In Verbindung mit dem weiten Einstellbereich des Blatteinstellwinkels kann mit optimaler Effizienz elektrische Energie zurückgewonnen werden. Die gewonnene Energie kann vorteilhaft zum Aufladen elektrischer Energiequelle genutzt werden. Vorteilhaft einsetzbar ist diese Ausgestaltung insbesondere bei Segelflugzeugen, die mit dem erfindungsgemäßen Antriebssystem ausgerüstet sind. Auch bei anderen Anwendungen kann der Generatorbetrieb vorteilhaft eingesetzt werden, beispielsweise zum Erzielen einer steuerbaren Bremswirkung.

Bei einer weiteren Ausgestaltung der Erfindung weisen die Blätter ein asymmetrisches Profil auf. Ein asymmetrisches Blattprofil ist für eine bestimmte Anströmrichtung optimiert. In Verbindung mit dem weiten Blatteinstellwinkelbereich der Erfindung kann dieses optimierte Blattprofil auch dann vorteilhaft eingesetzt werden, wenn eine Schubumkehr gewünscht ist.

Nachfolgend wird die Erfindung anhand eines Ausführungsbeispiels und anhand von zwei Figuren näher erläutert.

### Es zeigen:

- Fig. 1: eine erfindungsgemäßes Antriebssystem in perspektivischer Ansicht,
- Fig. 2: ein vereinfachtes Blockschaltbild der elektronischen Steuerung eines erfindungsgemäßen Antriebssystems.

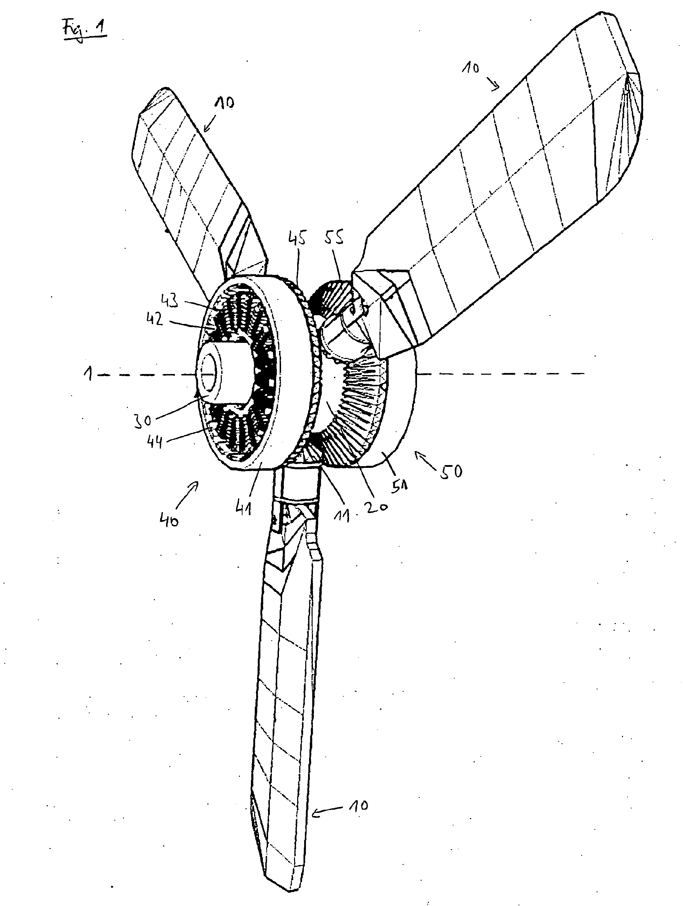

Das in Figur 1 dargestellte Antriebssystem weist einen Verstellpropeller mit einer Symmetrieachse 1 auf, der drei Blätter 10 hat. Das dargestellte Antriebssystem ist für eine Verwendung als Luftschraube vorgesehen. Jedes der Blätter weist nahe seiner Wurzel ein Kegelrad 11 auf. Durch das Kegelrad hindurch verläuft eine nicht dargestellte Längsachse, die in einem Nabenelement 20 drehbar gelagert und gegen eine Verschiebung in Richtung ihrer Längsachse gesichert ist. Das Nabenelement 20 ist auf der hohlen Achse 30 mittels eines nicht dargestellten Kugellagers drehbar gelagert.

Bei 40 ist ein erster Elektromotor dargestellt, der ein bürstenloser Außenläufer ist. Er weist einen Läufer 41, der auf der hohlen Achse 30 drehbar gelagert ist, und einen Stator 42 auf. Der Stator 42 ist fest mit der Achse 30 verbunden und weist 18 Statorwicklungen 43 auf. An der Innenseite des Läufers 41 und den Statorwicklungen 43 gegenüberliegend sind Permanentmagnete 44 angeordnet, die durch einen Luftspalt von den Statorwicklungen getrennt sind.

Der Elektromotor 40 ist auf der den Kegelrädern 11 der Blätter 10 zugewandten Seite des Läufers 41 mit einem Antriebszahnrad 45 fest verbunden, das ebenfalls als Kegelrad ausgeführt ist.

Bei 50 ist ein zweiter Elektromotor erkennbar, der dem ersten Elektromotor 40 entspricht. Am Läufer 51 des zweiten Elektromotors 50 ist ein zweites Antriebszahnrad 55 angeordnet, das ebenfalls den Kegelrädern 11 der Blätter 10 zugewandt ist.

Die beiden Antriebszahnräder 45 und 55 stehen in Eingriff mit den Kegelrädern 11 der Blätter 10, sodass eine relative Drehbewegung der beiden Antriebszahnräder 45 und 55 zu einer Rotation der Blätter 10 um ihre Längsachse führt.

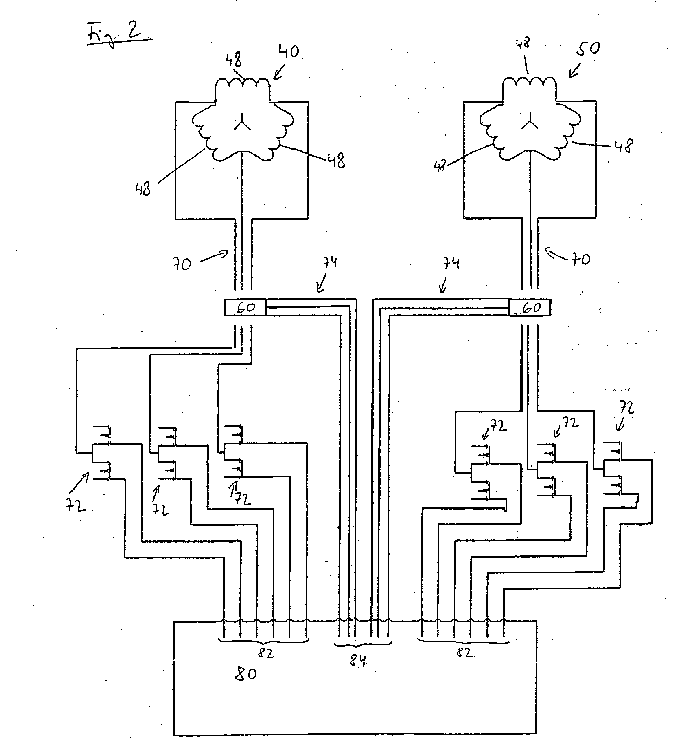

In dem Blockschaltbild der Figur 2 erkennt man bei 40 und 50 die beiden Elektromotoren, die durch ihre Statorwicklungen 48 versinnbildlicht sind. Jede der Statorwicklungen 48 umfaßt ggfs. mehrere der Statorwicklungen 43 aus Figur 1, die zusammengeschaltet sind und gemeinsam mit Strom versorgt werden.

Entsprechend den drei Phasen der Motoren führen jeweils dreiphasige Zuleitungen 70 zu den Statorwicklungen. Jede der drei Phasen jedes der beiden Motoren wird unabhängig über eine Brückenschaltung aus zwei Halbleiterschaltern 72 mit Strom versorgt.

Die Halbleiterschalter 72 werden von einer zentralen elektronischen Steuereinheit 80 über die an die Ausgänge 82 der Steuereinheit angeschlossenen Steuerleitungen angesteuert.

Jedem der beiden Motoren ist ein Nulldurchgangssensor 60 zugeordnet, der mit der dreiphasigen Zuleitung 70 verbunden ist und aus den Strömen bzw. Spannungen in diesen Zuleitungen Nulldurchgangssignale ermittelt, die über die Leitungen 74 an die Eingänge 84 der zentralen Steuereinheit 80 weitergegeben werden. Die Steuereinheit 80 erhält somit eine Rückmeldung über die Winkellage der Läufer der beiden Elektromotoren, sodass eine gezielte Steuerung dieser Winkellage über die Halbleiterschalter 72 zur gezielten Verstellung des Blatteinstellwinkels möglich wird.

Nachfolgend wird die Erfindung nochmals unter einem etwas anderen Blickwinkel betrachtet.

Demnach bezieht sich die Erfindung auch auf ein Verfahren zur Einstellung des Anstellwinkels eines Propellers, welcher durch die Positionsdifferenz zweier koaxial parallel betriebener Elektromotoren gewonnen wird. Das Verfahren vermeidet den Nachteil einiger anderer bekannter Vorrichtungen, bei denen die Blattverstellung nur über die Fliehkraft möglich ist. Ein weiterer Nachteil anderer Blattverstellungseinrichtungen besteht darin, dass diese zusätzliche externe Einrichtungen erfordern, beispielsweise Servos oder hydraulische Aktuatoren.

Stattdessen besteht eine Neuheit in der Verwendung des Elektromotor-Drehfeldes (Drehstrom), welches zweimal vorhanden sein soll (zwei mal drei Phasen). Ein relativer Versatz der Drehfelder wird dazu verwendet, mechanisch auf die Propellerflügel umgelenkt zu werden, und dadurch die gewünschte Verstellung zu erhalten.

Beispielhaft kann die Vorrichtung aus einem handelsüblichen bürstenlosen Außenläufer aufgebaut werden, der aus einer Motorachse, einem Stator und einer Motorglocke besteht und dahingehend erweitert wird, dass auf die zentrale Motorachse koaxial ein zweiter Stator und eine zweite Glocke montiert werden.

Die Motorachse muß in dieser Modifikation hohl ausgeführt werden, um die Leitungen der Stromzuführung für die Motorwicklung zu beherbergen. Die Füße der Luftschraubenblätter (zwei oder mehr), die beispielsweise mit einem Kegelradritzel versehen sind, sind über Kegelräder nach Art eines Differentialgetriebes zwischen beiden Motorglocken gelagert und in Wirkverbindung.

Werden beide Motoren in synchroner Betriebsart angesteuert (die relative Bewegung beider Motorglocken zueinander ist null), stellen sich die Luftschraubblätter auf eine neutrale Position ein. Diese Betriebsart kann als Null-Anstellwinkel bezeichnet werden, und ist mit einer fixierten Luftschraube vergleichbar.

Werden beide Motoren bzw. Motorhälften in Phasenverschiebungs-Betriebsart angesteuert (eine der beiden Motorglocken dreht relativ verzögert), passen sich die Luftschraubenblätter der neuen Situation an, verbleiben in der neuen Stellung und der neue Anstellwinkel ist eingestellt. Durch gezieltes Verschieben der Phasenwinkel kann so ein positiver oder negativer Propellerblattwinkel eingestellt werden. Dieses Prinzip kann sowohl für Propellerschrauben für Luftfahrzeuge Anwendung finden, als auch für Propeller für Wasserfahrzeuge.

## Patentansprüche

1. Antriebssystem mit
- einem Verstellpropeller mit einer Symmetrieachse, der mindestens zwei Blätter aufweist, die zur Verstellung des Blattanstellwinkels entlang ihrer Längsachse drehbar gelagert sind und ein Zahnrad aufweisen,
- zwei Antriebszahnrädern, die auf der Symmetrieachse angeordnet sind und von jeweils einer Seite mit den an den Blättern befindlichen Zahnrädern in Eingriff stehen, und
- zwei Elektromotoren, die jeweils mit einem der Antriebszahnräder verbunden sind.

2. Antriebssystem nach Anspruch 1, **dadurch gekennzeichnet, dass** drei oder mehr Blätter vorgesehen sind.

3. Antriebssystem nach Anspruch 1 oder 2, **dadurch gekennzeichnet, dass** die Zahnräder an den Blättern und die beiden Antriebszahnräder Kegelräder sind.

4. Antriebssystem nach Anspruch 1 oder 2, **dadurch gekennzeichnet, dass** die Zahnräder an den Blättern Stirnzahnräder und die beiden Antriebszahnräder Kronenräder sind.

5. Antriebssystem nach einem der Ansprüche 1 bis 4, **dadurch gekennzeichnet, dass** die Zahnräder an den Blättern am äußeren Ende der Blätter angeordnet sind und die Antriebszahnräder ringförmig ausgebildet sind.

6. Antriebssystem nach Anspruch 5, **dadurch gekennzeichnet, dass** die Elektromotoren bürstenlose Innenläufer sind, deren Läufer mit den Antriebszahnrädern verbunden sind, so dass die Statorwicklungen der Elektromotoren außerhalb des von den Blättern überstrichenen Bereichs angeordnet sind.

7. Antriebssystem nach einem der Ansprüche 1 bis 4, **dadurch gekennzeichnet, dass** die Zahnräder an den Blättern an den der Symmetrieachse zugewandten Enden der Blätter angeordnet sind.

8. Antriebssystem nach Anspruch 7, **dadurch gekennzeichnet, dass** die Elektromotoren bürstenlose Außenläufer sind, deren Läufer jeweils mit einem Antriebszahnrad verbunden sind, so dass die Statorwicklungen der Elektromotoren innerhalb des von den Blättern überstrichenen Bereichs angeordnet sind.

9. Antriebssystem nach Anspruch 7 oder 8, **dadurch gekennzeichnet, dass** die Läufer der beiden Elektromotoren auf einer gemeinsamen, hohlen Achse gelagert sind.

10. Antriebssystem nach einem der Ansprüche 7 bis 9, **dadurch gekennzeichnet, dass** die beiden Antriebszahnräder integral mit den Motorglocken der beiden Läufer gefertigt sind.

11. Antriebssystem nach einem der Ansprüche 1 bis 10, **dadurch gekennzeichnet, dass** eine elektronische Steuerung zur Ansteuerung der Elektromotoren vorgesehen ist.

12. Antriebssystem nach Anspruch 11, **dadurch gekennzeichnet, dass** die elektronische Steuerung Winkelsensoren zur Ermittlung der Winkelstellung der Elektromotoren aufweist.

13. Antriebssystem nach Anspruch 12, **dadurch gekennzeichnet, dass** als Winkelsensoren Nulldurchgangssensoren vorgesehen sind.

14. Antriebssystem nach einem der Ansprüche 1 bis 13, **dadurch gekennzeichnet, dass** die Elektromotoren auch im Generatorbetrieb betreibbar sind.

15. Antriebssytem nach einem der Ansprüche 1 bis 14, **dadurch gekennzeichnet, dass** die Blätter ein asymmetrisches Profil aufweisen.

## Claims

1. Drive system with
- a variable pitch propeller having an axis of symmetry and comprising at least two blades, which are rotatably mounted along their longitudinal axis for adjustment of their angle of attack and which have a gear wheel,
- two drive gears, which are arranged on the axis of symmetry and each which are in contact on one side with the gear wheels located on the blades, and
- two electrical motors, each of which are connected to one of the drive gears.

2. Drive system per claim 1, **characterised in that** three or more blades are provided.

3. Drive system per claim 1 or 2, **characterised in that** the gear wheels on the blades and the two drive gears are bevel gears.

4. Drive system per claim 1 or 2, **characterised in that** the gear wheels on the blades are spur gears and the two drive gears are crown wheels.

5. Drive system per one of the claims 1 to 4, **characterised in that** the gear wheels are located at the outer ends of the blades and the drive gears are designed in a ring shape.

6. Drive system per claim 5, **characterised in that** the electrical motors are brushless internal-rotor motors, whose rotors are linked to the drive gears such that the stator windings of the electrical motor are located outside the swept area of the blades.

7. Drive system per one of the claims 1 to 4, **characterised in that** the gear wheels are located at the ends of the blades facing the axis of symmetry.

8. Drive system per claim 7, **characterised in that** the electrical motors are brushless external-rotor motors, each of whose rotors are linked to one of the drive gears such that the stator windings of the electrical motor are located inside the swept area of the blades.

9. Drive system per claim 7 or 8, **characterised in that** the rotors of the two electrical motors are mounted on a common hollow axle.

10. Drive system per one of the claims 7 to 9, **characterised in that** the two drive gears are manufactured integral to the motor casing of the two rotors.

11. Drive system per one of the claims 1 to 10, **characterised in that** an electronic controller for controlling the electrical motors is provided.

12. Drive system per claim 11, **characterised in that** the electronic controller has angle sensors for ascertaining the angular adjustment of the electrical motors.

13. Drive system per claim 12, **characterised in that** zero crossing sensors are employed as angle sensors.

14. Drive system per one of the claims 1 to 13, **characterised in that** the electrical motors can also be run in generator operation.

15. Drive system per one of the claims 1 to 14, **characterised in that** the blades have an asymmetrical profile.

## Revendications

1. Système d'entraînement doté
d'une hélice à pas variable avec un axe de symétrie présentant au minimum deux pales pivotant sur leur axe longitudinal permettant le réglage de l'angle d'incidence des pales et dotées d'une roue dentée,
de deux roues motrices dentées situées sur l'axe de symétrie, chacune emboîtée d'un côté dans les roues dentées situées sur les pales ainsi que
de deux moteurs électriques reliés chacun à l'une des roues motrices dentées.

2. Système d'entraînement selon la revendication 1 **caractérisé en ce que** trois pales ou plus sont prévues.

3. Système d'entraînement selon la revendication 1 ou 2 **caractérisé en ce que** les roues dentées sur les pales et les deux roues motrices dentées sont des roues coniques.

4. Système d'entraînement selon la revendication 1 ou 2 **caractérisé en ce que** les roues dentées sur les pales sont des roues d'engrenage et les deux roues motrices dentées sont des roues de champ.

5. Système d'entraînement selon les revendications de 1 à 4 **caractérisé en ce que** les roues dentées sur les pales sont situées à l'extrémité extérieure des pales et que les roues motrices dentées sont de forme toroïdale.

6. Système d'entraînement selon la revendication 5 **caractérisé en ce que** les moteurs électriques sont des rotors internes sans balais dont chacun des rotors est relié aux roues motrices dentées de sorte que les enroulements statoriques des moteurs électriques sont situés en dehors de la zone de balayage des pales.

7. Système d'entraînement selon les revendications de 1 à 4 **caractérisé en ce que** les roues dentées des pales sont situées à l'extrémité des pales face à l'axe de symétrie.

8. Système d'entraînement selon la revendication 7 **caractérisé en ce que** les moteurs électriques sont des rotors externes sans balais dont chacun des rotors est relié à une roue motrice dentée de sorte que les enroulements statoriques des moteurs électriques sont situés à l'intérieur de la zone de balayage des pales.

9. Système d'entraînement selon la revendication 7 ou 8 **caractérisé en ce que** les rotors des deux moteurs électriques sont situés sur un même axe creux.

10. Système d'entraînement selon les revendications de 7 à 9 **caractérisé en ce que** les deux roues motrices dentées sont intégralement conçues avec les cloches des deux rotors.

11. Système d'entraînement selon les revendications de 1 à 10 **caractérisé en ce qu'**une commande électrique est prévue pour la commande des moteurs électriques.

12. Système d'entraînement selon la revendication 11 **caractérisé en ce que** la commande électrique présente des détecteurs angulaires pour le réglage de l'angle des moteurs électriques.

13. Système d'entraînement selon la revendication 12 **caractérisé en ce que** les détecteurs angulaires comprennent des capteurs de passage à zéro.

14. Système d'entraînement selon les revendications de 1 à 13 **caractérisé en ce que** les moteurs électriques puissent être également actionnés à l'aide d'un générateur.

15. Système d'entraînement selon les revendications de 1 à 14 **caractérisé en ce que** les pales présentent un profil asymétrique.
